# EUROPÄISCHE PATENTSCHRIFT

(11) **EP 3 560 076 B1**
(45) Veröffentlichungstag und Bekanntmachung des Hinweises auf die Patenterteilung: **08.09.2021**
(21) Anmeldenummer: 18821990.1
(22) Anmeldetag: 06.12.2018
(51) Int. Cl.: H02K 3/50, H02K 3/12, H02K 3/28, H02K 15/00

(54) **VERFAHREN ZUM HERSTELLEN EINER ANORDNUNG FÜR EINE STECKSPULE EINER ELEKTRISCHEN MASCHINE UND ANORDNUNG**
METHOD FOR PRODUCING AN ARRANGEMENT FOR A PLUG-IN COIL OF AN ELECTRICAL MACHINE, AND ARRANGEMENT
PROCÉDÉ DE FABRICATION D'UN AGENCEMENT POUR UNE BOBINE À INSÉRER D'UNE MACHINE ÉLECTRIQUE ET AGENCEMENT

(30) Priorität: 07.12.2017 DE 102017129134
(43) Veröffentlichungstag der Anmeldung: 30.10.2019
(73) Patentinhaber: Aumann AG, 48361 Beelen (DE)
(72) Erfinder: MARTINSCHLEDDE, Ludger, 33397 Rietberg (DE); SELL-LE BLANC, Florian, 76185 Karlsruhe (DE); SCHMIT, Timo, 59320 Ostenfelde (DE)
(74) Vertreter: Bittner, Thomas L.
(86) Internationale Anmeldenummer: PCT/DE2018/100995
(87) Internationale Veröffentlichungsnummer: WO 2019/110057

(56) Entgegenhaltungen:
- EP-A2- 1 039 616
- WO-A1-2017/186644
- US-A1- 2013 020 890
- US-A1- 2013 200 743
- US-A1- 2016 181 881

## Beschreibung

Die Erfindung betrifft ein Verfahren zum Herstellen einer Anordnung für eine Steckspule einer elektrischen Maschine sowie eine Anordnung für eine Steckspule einer elektrischen Maschine.

### Hintergrund

Ein derartiges Verfahren ist beispielsweise aus dem Dokument WO 2015 / 055445 A2 bekannt. Für einen Stator oder einen Rotor wird eine Anordnung für eine Steckspule einer elektrischen oder elektrodynamischen Maschine hergestellt. Hierbei werden zunächst stabförmige oder haarnadelförmige Spulenelemente vorausgerichtet oder vorpositioniert, um eine korbähnliche in sich geschlossene Anordnung der Spulenelemente bereitzustellen. Beine der Spulenelemente der vorausgerichteten Anordnung werden dann in zugordneten Nuten eines Kerns eingesteckt, um schließlich eine Spulenwicklung herzustellen.

Im Dokument EP 3 082 228 A1 ist in Verbindung mit einer Steckspule ein Verfahren beschrieben, bei dem zum Verbinden von Enden von Spulenelementen Verbindungselemente auf einer Stirnseite des Kerns angeordnet werden. Diese werden dort gesichert mithilfe von Sicherungselementen mit Vorsprüngen, die die Verbindungselemente übergreifen, um diese in ihrer Lage festzulegen.

Das Dokument EP 1 039 616 A2 betrifft einen Motor mit einer Motorstator-Struktur, in die eine Vielzahl von Schlitzen, die in axialer Richtung zeigen, an der Innenumfangsfläche eines zylindrischen Statorkerns vorgesehen sind. Leiter mit im Wesentlichen der gleichen Querschnittsform wie die Schlitze sind in die Schlitze eingesetzt.

Das Dokument US 2013/0200743 A1 offenbart einen Stator für eine rotierende elektrische Maschine. Der Stator umfasst einen zylindrischen Statorkern mit mehreren Schlitzen, die an einer Innenumfangsfläche ausgebildet sind; mehrere Spulensegmente, die von den Schlitzen aufgenommen werden; erste Spulenendplatten, die elektrisch mit den Spulensegmenten an einer der Endflächen des Statorkerns verbunden sind; und mehrere zweite Spulenendplatten, die elektrisch mit den Spulensegmenten an der anderen Endfläche des Statorkerns verbunden sind. Ein Plattenabschnitt mindestens eines der ersten Spulenendplatten ist länger als die Plattenabschnitte der anderen ersten Spulenendplatten ausgebildet und weist einen abgestuften Abschnitt auf.

Im Dokument WO 2017/186644 A1 ist eine vorgeformte Spule für einen Stator eines Generators einer getriebelosen Windkraftanlage offenbart. Die vorgeformte Spule umfasst einen elektrischen Leiter, wobei der elektrische Leiter mehrere Wicklungen und ein erstes und ein zweites Ende aufweist. Das erste Ende weist ein erstes Verbindungsteil zur Verbindung mit einem Verbindungselement auf und das zweite Ende weist ein zweites Verbindungsteil zur Verbindung mit einem weiteren Verbindungselement auf. Der elektrische Leiter beinhaltet Aluminium besteht im Wesentlichen hieraus.

Das Dokument US 2016/181881 A1 offenbart eine elektrische Maschine mit einem Stator, bestehend aus: mindestens einem Statorwicklungselement, das sich von einem ersten bis zu einem zweiten Ende erstreckt, die voneinander getrennt sind, mindestens einer elektrischen Brücke, die geeignet ist, die getrennten Enden des Statorwicklungselements elektrisch zu verbinden, mindestens einer Stütz- und Befestigungsplatte aus elektrisch isolierendem Material, die mindestens einen Sitz definiert, der geeignet ist, die elektrische Brücke zumindest teilweise aufzunehmen und in Position zu halten, wobei der Sitz mit Befestigungsmitteln versehen ist, die wenigstens teilweise eine geformte Kupplung mit der wenigstens einen elektrischen Brücke bilden, um sie mechanisch in ihrer Position auf der Stütz- und Befestigungsplatte zu arretieren, wobei der Sitz den Durchgang der Enden des Statorwicklungselements und die elektrische Verbindung zwischen diesem und der elektrischen Brücke ermöglicht, wobei der Sitz die elektrische Brücke von anderen Komponenten des Stators elektrisch isoliert.

### Zusammenfassung

Aufgabe der Erfindung ist es, verbesserte Technologien in Verbindung mit dem Herstellen einer Anordnung für eine Steckspule einer elektrischen Maschine, sei es in Verbindung mit einem Rotor oder einem Stator, anzugeben, die eine flexible Herstellung der Steckspule unterstützen.

Zur Lösung der Aufgabe ist ein Verfahren zum Herstellen einer Anordnung für eine Steckspule einer elektrischen Maschine nach dem unabhängigen Anspruch 1 geschaffen. Der nebengeordnete Anspruch 13 betrifft eine Anordnung für eine Steckspule einer elektrischen Maschine. Ausgestaltungen sind Gegenstand von abhängigen Unteransprüchen.

Die vorgeschlagenen Technologien ermöglichen eine flexible und an unterschiedliche Anwendungen angepasste Ausbildung der elektrischen Verbindungen zwischen den eingesteckten Spulenelementen in den Nuten des Kerns.

Vor dem Fügen der Fügepartner können wahlweise ergänzende Vorpositionier- und / oder Sicherungsmaßnahmen vorgesehen sein, um die Fügepartner zum Fügen (endgültig) festzulegen. Alternative ist ein Fügen der Fügepartner ohne weitere Maßnahmen zum Vorpositionieren möglich, derart, dass die Fügepartner für den Fügeprozess ausschließlich aufgrund der hergestellten Verbindung relativ zueinander positioniert werden.

Die relative Lage der Fügepartner kann hinsichtlich der räumlichen Lage der Fügepartner mittels der hergestellten Verbindung festgelegt oder gesichert sein.

Die Fügepartner können mittels der Verbindung lösbar miteinander verbunden sein.

Die Spulenelemente können verschiedene Formen der stabförmigen Ausbildung aufweisen. Hierzu gehört zum Beispiel auch eine Haarnadelform oder eine U-Form, bei denen stabförmige Beine auf einer Seite miteinander verbunden sind, derart, dass die Fügeverbindungen nach dem Einstecken der Spulenelemente in den Kern im Bereich freier Enden der Spulenelemente hergestellt werden können.

Die eingesteckten Spulelenelemente sind in den Nuten des Kerns vom Material des Kerns elektrisch isoliert. Hierzu kann zum Beispiel vorgesehen sein, einen Isoliermantel vorzusehen, welcher das Spulenelement in der zugeordneten Nut umgibt. Für das Ausbilden der elektrischen Isolierung sind verschiedene Ausführungen als solche bekannt.

Die Verbindung ist als Schnappverbindung oder Rastverbindung ausgeführt.

Im Bereich der Verbindung können stirnseitig und / oder umfangsseitig elektrische Kontaktstellen zwischen den Fügepartnern ausgebildet werden. Im Bereich der elektrischen Kontaktstellen wird aufgrund der Ausbildung der Verbindung zwischen den zu fügenden Partnern (Fügepartner) ein elektrischer Kontakt hergestellt. Beim Fügen kann der elektrische Kontakt zwischen den Fügepartnern weitergehend oder ergänzend ausgebildet werden, insbesondere dadurch, dass Fügematerial in den Bereich zwischen gegenüberliegende Flächen der Fügepartner gelangt und hierdurch die Fläche elektrisch kontaktiert werden.

Im Bereich der elektrischen Kontaktstellen können mit einer Leiterschicht versehene Oberflächenabschnitte der Fügepartner in Kontakt gebracht werden. Die Leiterschicht, zum Beispiel in Form einer Schicht aus einem Metall oder einer Metalllegierung, kann vor dem Herstellen der Verbindung zwischen den zu fügenden Partnern aufgebracht werden, um den elektrischen Kontakt zwischen den Fügepartnern zu unterstützen. Zum Beispiel kann eine Schicht aus einem Lotmaterial vorgesehen sein, welches beim Fügen zur Kontaktausbildung oder -verbesserung aufschmilzt und die Fügepartner (lokal) elektrisch (zusätzlich) kontaktiert.

Beim Ausbilden der Verbindung zwischen den Fügepartnern wird ein am distalen oder proximalen Ende des Spulenelements angeordneter Vorsprung in einer zugeordneten Ausnehmung am Fügeabschnitt des ersten Verbindungselements angeordnet. In einer Ausführungsform ist im Bereich des distalen / proximalen Endes des jeweiligen Spulenelements ein vorstehender Zapfen, sei es mit rundem oder eckigen Querschnitt, ausgebildet, der beim Herstellen der Verbindung zwischen dem Ende des Spulenelements und dem zugeordneten Fügeabschnitt des ersten Verbindungselements in eine zugeordnete Ausnehmung an dem ersten Verbindungselement eingreift, insbesondere formschlüssig, wobei die Ausnehmung als ein Durchbruch oder eine geschlossene Vertiefung ausgeführt sein kann.
Für das erste Verbindungselement kann ein geometrisch flaches Leitermaterial verwendet werden. Die Ausführung des oder der Verbindungselemente als flaches Leitermaterial unterstützt zum Beispiel ein Stapeln von Verbindungselementen, insbesondere aufeinander.
Wenigstens ein mittlerer Abschnitt des ersten Verbindungselements, der zwischen dem ersten Fügeabschnitt und dem zweiten Fügeabschnitt angeordnet ist, kann zumindest abschnittsweise entlang eines radial innenliegenden und / oder eines radial außenliegenden Rands einer vom Kern auf der gegenüberliegenden Stirnseite oder der Stirnseite erfassten Fläche verlaufend angeordnet werden. Der mittlere Abschnitt des ersten Verbindungselements kann im Wesentlichen vollständig im Bereich des radial innenliegenden und / oder des radial außenliegenden Rands verlaufen.
Es kann vorgesehen sein, eine jeweilige Fügeverbindung für die distalen oder proximalen Enden eines dritten und eines vierten Spulenelements mit einem zugeordneten zweiten Verbindungselement auf der gegenüberliegenden Stirnseite oder der Stirnseite des Kerns herzustellen, wobei hierbei vor dem Fügen, insbesondere zum Vorpositionieren, zwischen den jeweiligen Fügepartnern, nämlich dem distalen oder dem proximalen Ende des dritten Spulenelements und einem ersten Fügeabschnitt des zweiten Verbindungselements sowie dem distalen oder dem proximalen Ende des vierten Spulenelements und einem zweiten Fügeabschnitt des zweiten Verbindungselements, jeweils eine Verbindung ausgebildet wird, mit der die relative Lage der Fügepartner zueinander festgelegt wird. Auf diese Weise können mehrere Verbindungselemente im Bereich der gegenüberliegenden Stirnseite oder der Stirnseite des Kerns zum elektrischen Verbinden von distalen / proximalen Enden von Spulenelementen angeordnet werden. Beim Fügen des zweiten Verbindungselements kann wahlweise das distale / proximale Ende des ersten oder des zweiten Spulenelements einbezogen werden. In diesem Fall kann alternativ die Fügeverbindung zum distalen / proximalen Ende des dritten oder des vierten Spulenelements entfallen.

Zumindest das erste Verbindungselement kann als Teil eines ersten segmentierten Schaltrings auf der gegenüberliegenden Stirnseite oder der Stirnseite des Kerns hergestellt werden. Mithilfe des ersten Verbindungselements und wahlweise weiterer Verbindungselemente kann so auf der gegenüberliegenden Stirnseite oder der Stirnseite des Kerns ein erster segmentierter Schalt- oder Verschaltring für die Steckspule hergestellt werden.

Vergleichbar den Fügeverbindungen für distale / proximale Enden von Spulenelementen auf der gegenüberliegenden Stirnseite des Kerns können weitere Fügeverbindungen für proximale / distale Enden von Spulenelementen auf der Stirnseite des Kerns hergestellt werden. Für das Herstellen der weiteren Fügeverbindungen an den proximalen Enden der Spulenelemente auf der Stirnseite des Kerns werden weitere Verbindungselemente verwendet, die dem ersten oder dem zweiten Verbindungselement entsprechend ausgebildet sein können. Die weiteren Verbindungselemente stellen Fügeabschnitte bereit, die mit den proximalen Enden der Spulenelemente gefügt werden. In einer Ausführungsform kann so auf der Stirnseite des Kerns ein zweiter segmentierter Schalt- oder Verschaltring für die Steckspule hergestellt werden. Der zweite segmentierte Schalt- oder Verschaltring kann gleich dem ersten segmentierten Schaltring oder verschiedenen hiervon ausgebildet werden.

Die Spulenelemente können als gerade stabförmige Spulenelemente bereitgestellt werden. Die in den Kern eingesteckten Spulenelemente können alle von gleicher Bauart sein. Alternativ können Spulenelemente verschiedener Bauarten eingesteckt werden, zum Beispiel Spulenelemente unterschiedlicher Länge und / oder mit unterschiedlichen Querschnittsformen. In einer möglichen Ausführungsform können U-förmige oder haarnadelförmige Spulenelemente zum Einsatz kommen, bei denen dann freie Enden (an stabförmigen Beinen) mittels der Verbindungselemente verbunden werden können.

Die Spulenelemente können in sequentiell aufeinander folgenden Einsteckvorgängen in die Nuten eingesteckt werden. Im Rahmen eines Einsteckvorgangs können ein oder mehrere Spulenelemente gleichzeitig eingesteckt werden, wobei im Fall von mehreren Spulenelementen diese voneinander getrennt gebildet sein können, also insbesondere nicht miteinander verflochten oder ineinandergesteckt sein können, was es erfordern kann, die getrennten Spulenelemente getrennt zu greifen und beim Einstecken getrennt zu halten. Ein folgender Einsteckvorgang während des sequentiellen Einsteckens kann beginnen, während ein vorangehender Einsteckvorgang noch nicht beendet ist. Alternativ kann der folgende Einsteckvorgang erst gestartet werden, nachdem der vorangehende Einsteckvorgang beendet ist, beispielsweise dann, wenn für den folgenden Einsteckvorgang dieselbe Greifeinrichtung verwendet wird, die für den vorangehenden Einsteckvorgang genutzt wurde. In einer anderen Ausführungsform können mehrere Greifvorrichtungen zum Einsatz kommen, die für die sequentiell auszuführenden Einsteckvorgänge verwendet werden.

Mehrere Verbindungselemente können auf der gegenüberliegenden Stirnseite und / oder der Stirnseite des Kerns in Lagen übereinander gestapelt angeordnet werden. Gestapelte Anordnungen von Verbindungselementen, in denen die Lagen elektrisch voneinander isoliert sein können, können ein- oder beidseitig an dem Kern vorgesehen sein. Abschnitte der gestapelten Anordnung von Verbindungselementen können sich im Wesentlichen im Bereich des radial innenliegenden und / oder des radial außenliegenden Rands der vom Kern auf der Stirnseite und / oder gegenüberliegenden Stirnseite erfassten Fläche verlaufen. Zwischen gestapelten Anordnungen in den Randbereichen können nicht gestapelte Abschnitte oder freibleibende Bereiche vorgesehen sein.

Die vor dem Fügen hergestellten und die Relativlage der Fügepartner sichernden Verbindungen zwischen den Verbindungselementen und den Enden der Spulenelemente können alle oder zum Teil freiliegend einsehbar sein, insbesondere mit Blick auf die Stirnseite und / oder die gegenüberliegende Stirnseite des Kerns. Hierdurch kann ein Zugriff auf oder Zugang für die in den Verbindungen ausgebildeten Verbindungspunkte bereitgestellt sein, beispielweise derart, dass die weitere Bearbeitung der Verbindungen zum Fügen ermöglicht ist, zum Beispiel mittels Schweißen, insbesondere Laserschweißen. In ähnlicher Weise können nach dem Fügen die Fügeverbindungen alle oder zum Teil freiliegend einsehbar sein, insbesondere mit Blick auf die Stirnseite und / oder die gegenüberliegende Stirnseite des Kerns, was zum Beispiel eine Nachbearbeitung der Fügeverbindungen ermöglichen kann.

Alternativ können ein oder mehrere Verbindungen vor und / oder nach dem Fügen verdeckt sein. Hierbei kann im Fall von gestapelten Verbindungselementen ein iteratives Vorgehen vorgesehen sein, d.h. erst werden einer Ebene ein oder mehrere Verbindungselemente angeordnet, diese verschweißt, dann wird eine nächste Ebene ausgebildet.

Als erstes Verbindungselement kann ein Verbindungselement verwendet wird, welches ein oder mehrere Anschlusskontakte aufweist. Der oder die Anschlusskontakte, die zum Beispiel mit einer jeweils zugeordneten Lasche gebildet sind, können mit Blick auf die Stirnseite / gegenüberliegende Stirnseite des Kerns radial überstehen. Mehrere Anschlusskontakte, die an verschiedenen Verbindungselementen gebildet sein können, können in radialer Umfangsrichtung versetzt zueinander angeordnet sein. Über die Anschlusskontakte kann eine äußere Kontaktierung einer mit den Spulenelementen gebildeten Spule erfolgen.

Das Verbindungselement, wahlweise mit einem hieran gebildeten Anschlusskontakt, kann als ein Stanzbauteil ausgeführt sein. Eine Ausführung als flaches, wahlweise ebenes Blechbauteil kann vorgesehen sein.

Bei dem Verfahren zum Herstellen und der Anordnung kann vorgesehen sein, dass ein oder mehrere Verbindungselemente auf der Stirnseite und / oder der gegenüberliegenden Stirnseite in einer Vertiefung oder einer Ausnehmung angeordnet werden / sind, die am Kern gebildet ist, beispielweise in einem radial außenliegenden Abschnitt des Kerns. Zum Beispiel können eine oder mehrere Nuten vorgesehen sein. Zum Ausbilden der Vertiefung / Ausnehmung kann am Kern eine stirnseitige Profilierung vorgesehen sein. In einer Vertiefung des Kernmaterials können eine oder mehrere Verbindungselemente angeordnet sein.

Beim Fügen können stoffschlüssige Fügeverbindungen hergestellt werden.

In Verbindung mit der Anordnung für eine Steckspule einer elektrischen Maschine gelten die vorangehend im Zusammenhang mit dem Verfahren gemachten Ausführungen entsprechend.

### Beschreibung von Ausführunqsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer Anordnung für eine Steckspule einer elektrischen Maschine, wobei zur Vereinfachung ein Kern der Anordnung weggelassen ist;
- Fig. 2: eine schematische perspektivische Darstellung einer Anordnung für eine Steckspule einer elektrischen Maschine von vorn und von der Seite;
- Fig. 3: eine schematische perspektivische Darstellung der Anordnung aus Fig. 2;
- Fig. 4: eine schematische Darstellung eines Bereichs einer Verbindung zwischen Fügepartnern;
- Fig. 5: eine schematische Darstellung des Bereichs der Verbindung aus Fig. 4, wobei elektrische Kontaktstellen markiert sind;
- Fig. 6: eine schematische perspektivische Darstellung eines Verbindungselements und
- Fig. 7: eine schematische perspektivische Darstellung eines weiteren Verbindungselements.

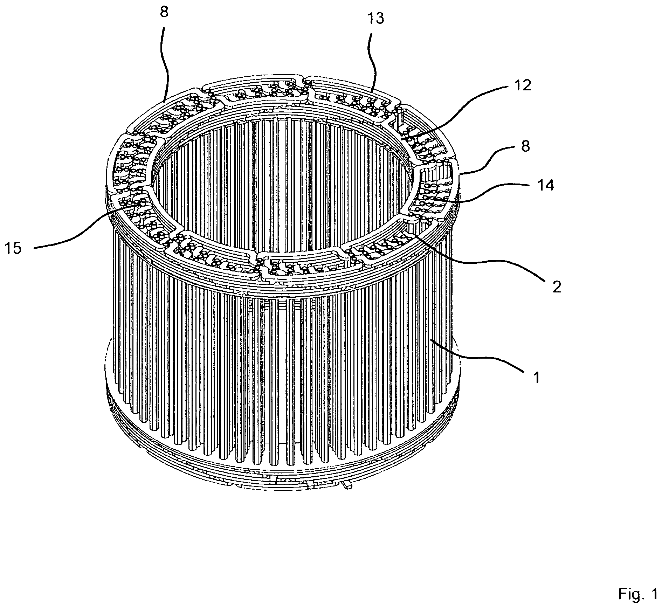

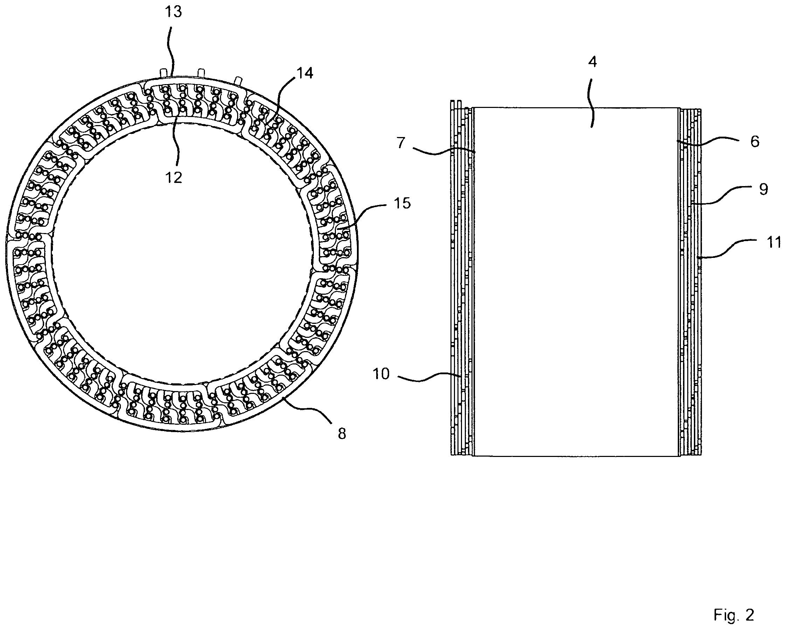

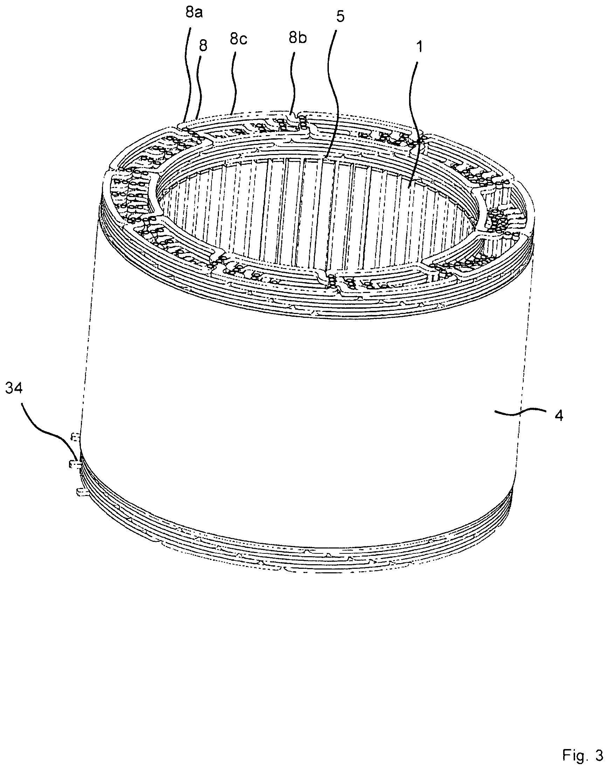

Fig. 1 zeigt eine schematische perspektivische Darstellung einer Anordnung für eine Steckspule einer elektrischen Maschine mit Spulenelementen 1, die stabförmig sind und ein proximales und ein distales Ende 2, 3 aufweisen. Bei der Darstellung in Fig. 1 ist ein Kern 4 weggelassen, der bei der weiteren Anordnung in den Fig. 2 und 3 gezeigt ist. Die Spulenelemente 1 sind danach in Nuten 5 des Kerns 4 angeordnet, nachdem die Spulenelemente 1 in die Nuten 5 eingesteckt wurden.

Auf einer Stirnseite 6 und einer gegenüberliegenden Stirnseite 7 des Kerns 4 sind Verbindungselemente 8 in einer gestapelten Anordnung 9 angeordnet, derart, dass die Verbindungselemente 8 jeweils proximale Enden 2 der Spulenelemente 1 (auf der Stirnseite 6) und distale Enden 3 der Spulenelemente 1 (auf der gegenüberliegenden Stirnseite 7) elektrisch verbinden. Hierdurch ist bei der gezeigten Ausführungsform auf der gegenüberliegenden Stirnseite 7 ein erster segmentierter Schaltring 10 und auf der Stirnseite 6 ein zweiter segmentierter Schaltring 11 hergestellt. In einer alternativen Ausbildungsform (nicht dargestellt) können die Verbindungselemente 8 auch nur auf der Stirnseite 6 oder nur auf der gegenüberliegenden Stirnseite 7 zum Verbinden der proximalen oder der distalen Enden 2, 3 vorgesehen sein.

Bei der beispielhaft gezeigten Ausführungsform sind die Verbindungselemente 8 aus einem Flachdrahtmaterial.

Die Verbindungselemente 8 weisen jeweils einen ersten und einen zweiten Fügeabschnitt 8a, 8b auf, die als Fügepartner für die distalen oder die proximalen Enden 2, 3 der Spulenelemente 1 dienen. Zumindest ein mittlerer Abschnitt 8c der Verbindungselemente 8 ist bei der gezeigten Ausführungsform im Bereich eines radial innenliegenden oder eines radial außenliegenden Rands 12, 13 einer Fläche 14 angeordnet, die von dem Kern 4 auf der Stirnseite 6 oder auf der gegenüberliegenden Stirnseite 7 erfasst wird.

Zwischen den gestapelten Anordnungen 9 der Verbindungselemente 8 ist ein freibleibender Bereich 15 ausgebildet.

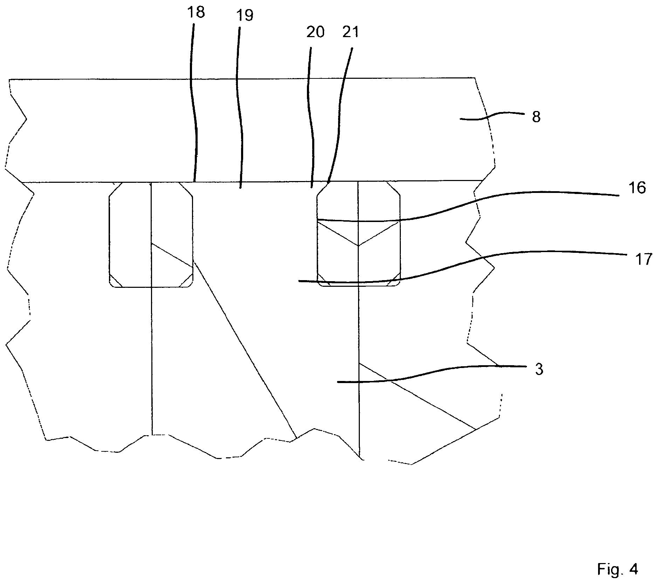

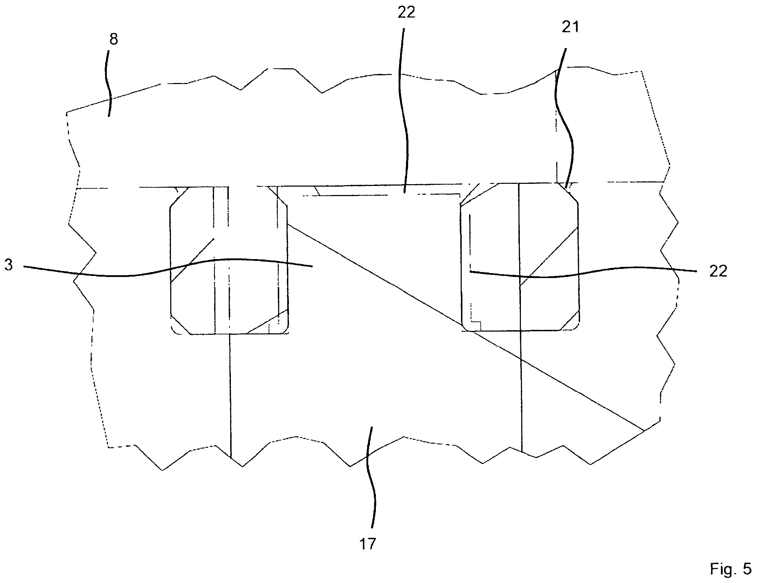

Zum Herstellen elektrischer Verbindungen mittels der Verbindungselemente 8 werden diese mit den proximalen oder den distalen Enden 2, 3 gefügt, beispielsweise mittels Schweißen und / oder Löten. Vor dem Fügen wird zum Vorpositionieren zwischen dem ersten und dem zweiten Fügeabschnitt 8a, 8b und dem zugeordneten proximalen oder distalen Ende 2, 3 der Spulenelemente 1 eine Verbindung 16 hergestellt, für die die Fig. 4 und 5 eine mögliche Ausführungsform zeigen. Mittels der Verbindung 16 sind die zu fügenden Partner vor dem Fügen relativ zueinander fixiert, nämlich der erste oder der zweite Fügeabschnitt 8a, 8b und ein jeweils zugeordnetes Ende der Spulenelemente 1.

Die Verbindung 16 kann beispielsweise als Schnappverbindung, Steckverbindung und / oder Rastverbindung ausgebildet sein, wobei zum Beispiel das Druckknopfprinzip (Schnappverbindung) zur Anwendung kommen kann. Eine solche Ausführungsform ist in den Fig. 4 und 5 gezeigt. Am distalen Ende 3 ist ein als Zapfen ausgeführter Vorsprung 17 ausgebildet, auf den das Verbindungselement 8 aufgesteckt ist. Der Vorsprung 17 ist in einer zugeordneten Ausnehmung 18 des Verbindungselements 8 angeordnet. Ein am Vorsprung 17 an einem distalen Zapfenende 19 gebildeter Vorsprung 20 greift in eine (umlaufende) Nut 21 an dem Verbindungselement 8 ein.

In vergleichbarer Weise können im Bereich der proximalen Enden 2 alternativ oder ergänzend Verbindungen mit zugeordneten Verbindungselementen hergestellt werden.

Fig. 5 zeigt schematisch elektrische Kontaktstellen oder -flächen 22 zwischen den Fügepartnern, die sich aufgrund des Ausbildens der Verbindung 16 ergeben.

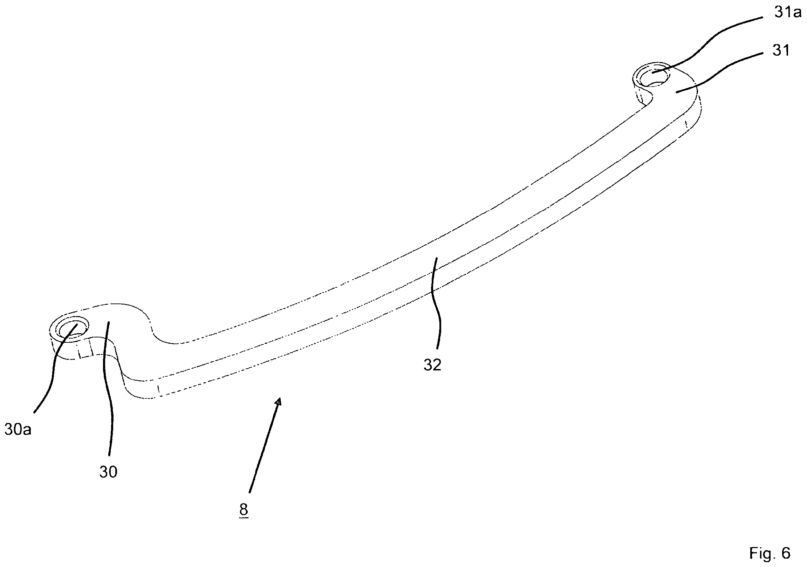

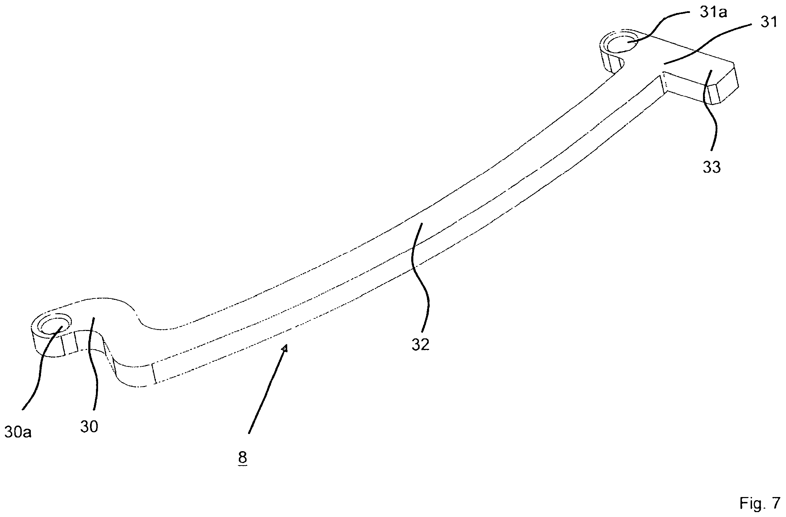

In den Fig. 6 und 7 sind schematische perspektivische Darstellungen von beispielhaften Ausführungsformen der Verbindungselement 8 gezeigt. Diese sind einstückig ausgeführt und weisen in Endabschnitten 30, 31 Durchbrüche 30a, 31a auf, die der Aufnahme der proximalen oder der distalen Enden 2, 3, um danach die jeweilige Fügeverbindung herzustellen. Die gegenüberliegenden Endabschnitte 30, 31 stehen zumindest abschnittsweise quer zu einem mittleren Abschnitt 32, der als (leicht) gekrümmter Elementabschnitt ausgeführt ist.

Der Endabschnitt 30 weist eine S-Form auf. Die Durchbrüche 30a, 31a sind in Bezug auf den mittleren Abschnitt 32 auf derselben Seite des Verbindungselements 8 angeordnet. Bei der Ausführung in Fig. 7 weist der Endabschnitt 31 eine gegenüberliegende Verlängerung 33 auf. Mit der Verlängerung 33 kann ein Anschlusskontakt 34 ausgebildet werden, wie dies in Fig. 3 gezeigt ist. Der oder die Anschlusskontakte, die zum Beispiel mit einer jeweils zugeordneten Lasche gebildet sind, sind bei der gezeigten Ausführungsform mit Blick auf die Stirnseite / gegenüberliegende Stirnseite des Kerns 4 radial überstehend ausgeführt. Mehrere Anschlusskontakte, die an verschiedenen Verbindungselementen gebildet sein können, können in radialer Umfangsrichtung versetzt zueinander angeordnet sein (vgl. Fig. 3). Über die Anschlusskontakte kann eine äußere Kontaktierung einer mit den Spulenelementen gebildeten Spule erfolgen.

Bei der gezeigten Ausführungsform sind die Verbindungselemente aus einem geometrisch flachen Leitermaterial.

## Patentansprüche

1. Verfahren zum Herstellen einer Anordnung für eine Steckspule einer elektrischen Maschine, mit:
- Bereitstellen eines Kerns (4) mit Nuten (5);
- Bereitstellen von Spulenelementen (1), die stabförmig sind und ein proximales und ein distales Ende aufweisen;
- Einstecken der Spulelemente (1) in die Nuten von einer Stirnseite (6) des Kerns (4) mit dem distalen Ende voran, derart, dass das proximale Ende im Bereich der Stirnseite (6) und das distale Ende im Bereich einer gegenüberliegenden Stirnseite (7) des Kerns (4) oder benachbart hierzu angeordnet werden; und
- Herstellen einer jeweiligen Fügeverbindung für die distalen oder die proximalen Enden eines ersten und eines zweiten Spulenelements mit einem zugeordneten ersten Verbindungselement (8) auf der gegenüberliegenden Stirnseite (7) oder der Stirnseite (6) des Kerns (4), wobei hierbei vor dem Fügen zwischen den jeweiligen Fügepartnern, nämlich dem distalen oder dem proximalen Ende des ersten Spulenelements und einem ersten Fügeabschnitt (8a) des ersten Verbindungselements (8) sowie dem distalen oder dem proximalen Ende des zweiten Spulenelements und einem zweiten Fügeabschnitt (8b) des ersten Verbindungselements (8), jeweils eine Verbindung (16) ausgebildet wird, mit der die relative Lage der Fügepartner zueinander festgelegt wird und die als Schnappverbindung und / oder Rastverbindung ausgeführt ist;
wobei
- beim Ausbilden der Verbindung (16) zwischen den Fügepartnern ein am distalen oder proximalen Ende des Spulenelements angeordneter Vorsprung (17), welcher als ein Zapfen ausgeführt ist und auf den das erste Verbindungselement (8) aufgesteckt wird, in einer zugeordneten Ausnehmung (18) am Fügeabschnitt (8a) des ersten Verbindungselements (8) angeordnet wird; und
- ein am Vorsprung (17) an einem distalen Zapfenende (19) gebildeter Vorsprung (20) in eine umlaufende Nut (21) an dem ersten Verbindungselement (8) eingreift.

2. Verfahren nach Anspruch 1, **dadurch gekennzeichnet, dass** im Bereich der Verbindung stirnseitig und / oder umfangsseitig elektrische Kontaktstellen zwischen den Fügepartnern ausgebildet werden.

3. Verfahren nach Anspruch 2, **dadurch gekennzeichnet, dass** im Bereich der elektrischen Kontaktstellen mit einer Leiterschicht versehene Oberflächenabschnitte der Fügepartner in Kontakt gebracht werden.

4. Verfahren nach mindestens einem der vorangehenden Ansprüche, **dadurch gekennzeichnet, dass** für das erste Verbindungselement ein geometrisch flaches Leitermaterial verwendet wird.

5. Verfahren nach mindestens einem der vorangehenden Ansprüche, **dadurch gekennzeichnet, dass** wenigstens ein mittlerer Abschnitt (8c; 32) des ersten Verbindungselements (8), der zwischen dem ersten Fügeabschnitt und dem zweiten Fügeabschnitt angeordnet ist, zumindest abschnittsweise entlang eines radial innenliegenden und / oder eines radial außenliegenden Rands einer vom Kern (4) auf der gegenüberliegenden Stirnseite (7) oder der Stirnseite (6) erfassten Fläche verlaufend angeordnet wird.

6. Verfahren nach mindestens einem der vorangehenden Ansprüche, **gekennzeichnet durch** Herstellen einer jeweiligen Fügeverbindung für die distalen oder proximalen Enden eines dritten und eines vierten Spulenelements mit einem zugeordneten zweiten Verbindungselement auf der gegenüberliegenden Stirnseite (7) oder der Stirnseite (6) des Kerns (4), wobei hierbei vor dem Fügen zwischen den jeweiligen Fügepartnern, nämlich dem distalen oder dem proximalen Ende des dritten Spulenelements und einem ersten Fügeabschnitt des zweiten Verbindungselements sowie dem distalen oder dem proximalen Ende des vierten Spulenelements und einem zweiten Fügeabschnitt des zweiten Verbindungselements, jeweils eine Verbindung ausgebildet wird, mit der die relative Lage der Fügepartner zueinander festgelegt wird.

7. Verfahren nach mindestens einem der vorangehenden Ansprüche, **dadurch gekennzeichnet, dass** zumindest das erste Verbindungselement (8) als Teil eines ersten segmentierten Schaltrings auf der gegenüberliegenden Stirnseite (7) oder der Stirnseite (6) des Kerns (4) hergestellt wird.

8. Verfahren nach mindestens einem der vorangehenden Ansprüche, **dadurch gekennzeichnet, dass**, vergleichbar den Fügeverbindungen für distale / proximale Enden von Spulenelementen auf der gegenüberliegenden Stirnseite (7) des Kerns (4), weitere Fügeverbindungen für proximale / distale Enden von Spulenelementen auf der Stirnseite (6) des Kerns (4) hergestellt werden.

9. Verfahren nach mindestens einem der vorangehenden Ansprüche, **dadurch gekennzeichnet, dass** die Spulenelemente (1) als gerade stabförmige Spulenelemente bereitgestellt werden.

10. Verfahren nach mindestens einem der vorangehenden Ansprüche, **dadurch gekennzeichnet, dass** die Spulenelemente in sequentiell aufeinander folgenden Einsteckvorgängen in die Nuten (5) eingesteckt werden.

11. Verfahren nach mindestens einem der vorangehenden Ansprüche, **dadurch gekennzeichnet, dass** mehrere Verbindungselemente auf der gegenüberliegenden Stirnseite (7) und / oder der Stirnseite (6) des Kerns (4) in Lagen übereinander gestapelt angeordnet werden.

12. Verfahren nach mindestens einem der vorangehenden Ansprüche, **dadurch gekennzeichnet, dass** als erstes Verbindungselement (8) ein Verbindungselement verwendet wird, welches einen oder mehrere Anschlusskontakte aufweist.

13. Anordnung für eine Steckspule einer elektrischen Maschine, mit:
- einem Kern (4), der Nuten (5) aufweist; und
- Spulenelementen (1), die stabförmig sind und ein proximales und ein distales Ende aufweisen, wobei die Spulenelemente (1) von einer Stirnseite (6) des Kerns (4) in die Nuten (5) eingesteckt sind, derart, dass das proximale Ende im Bereich der Stirnseite (6) und das distale Ende im Bereich einer gegenüberliegenden Stirnseite (7) des Kerns (4) oder benachbart hierzu angeordnet sind;
wobei zum Vorpositionieren vor einem Fügen zwischen jeweiligen Fügepartnern, nämlich dem distalen oder dem proximalen Ende eines ersten Spulenelements und einem ersten Fügeabschnitt (8a) eines ersten Verbindungselements (8) sowie dem distalen oder dem proximalen Ende eines zweiten Spulenelements und einem zweiten Fügeabschnitt (8b) des ersten Verbindungselements (8), jeweils eine Verbindung (16) ausgebildet ist, mit der die relative Lage der Fügepartner zueinander festgelegt ist und die als Schnappverbindung und / oder Rastverbindung ausgeführt ist;
wobei
- beim Ausbilden der Verbindung (16) zwischen den Fügepartnern ein am distalen oder proximalen Ende des Spulenelements angeordneter Vorsprung (17), welcher als Zapfen ausgeführt ist und auf den das erste Verbindungselement (8) aufgesteckt wird, in einer zugeordneten Ausnehmung (18) am Fügeabschnitt (8a) des ersten Verbindungselements (8) angeordnet ist; und
- ein am Vorsprung (17) an einem distalen Zapfenende (19) gebildeter Vorsprung (20) in eine umlaufende Nut (21) an dem ersten Verbindungselement (8) eingreift.

## Claims

1. Method for producing an arrangement for a plug-in coil of an electrical machine, comprising:
- providing a core (4) with grooves (5);
- providing coil elements (1) which are rod-shaped and have a proximal and a distal end;
- inserting the coil elements (1) into the grooves from an end face (6) of the core (4) with the distal end in front in such a way that the proximal end is arranged in the area of the end face (6) and the distal end is arranged in the area of an opposite end face (7) of the core (4) or adjacent thereto; and
- producing a respective joining connection for the distal or the proximal ends of a first and a second coil element with an assigned first connection element (8) on the opposite end face (7) or on the end face (6) of the core (4), wherein in each case prior to the joining between the respective joining partners, namely the distal or the proximal end of the first coil element and a first joining section (8a) of the first connection element (8) as well as the distal or the proximal end of the second coil element and a second joining section (8b) of the first connection element (8), a connection (16) is respectively formed, by means of which the relative position of the joining partners to one another is fixed and which is designed as a snap connection and/or latching connection;
wherein
- when forming the connection (16) between the joining partners, a projection (17), which is arranged on the distal or proximal end of the coil element, which is configured as a pin, and on which the first connection element (8) is mounted, is arranged in an assigned recess (18) on the joining section (8a) of the first connection element (8); and
- a projection (20), formed on the projection (17) on a distal pin end (19), engages into a circumferential groove (21) on the first connection element (8).

2. Method according to claim 1, **characterized in that** electrical contact points are designed between the joining partners on the end face and/or circumferential side in the area of the connection.

3. Method according to claim 2, **characterized in that** surface sections of the joining partners, provided with a conductive layer, are contacted in the area of the electrical contact points.

4. Method according to at least one of the preceding claims, **characterized in that** a geometrically flat conductor material is used for the first connection element.

5. Method according to at least one of the preceding claims, **characterized in that** at least one center section (8c; 32) of the first connection element (8), arranged between the first joining section and the second joining section, is arranged extending at least in sections along a radially inner and/or a radially outer edge of a surface covered by the core (4) on the opposite end face (7) or on the end face (6).

6. Method according to at least one of the preceding claims, **characterized by** producing a respective joining connection for the distal or proximal ends of a third and of a forth coil element with an assigned second connection element on the opposite end face (7) or on the end face (6) of the coil (4), wherein in each case prior to the joining between the respective joining partners, namely the distal or the proximal end of the third coil element and a first joining section of the second connection element as well as the distal or the proximal end of the fourth coil element and a second joining section of the second connection element, a connection is respectively formed, by means of which the relative position of the joining partners to one another is fixed.

7. Method according to at least one of the preceding claims, **characterized in that** at least the first connection element (8) is produced as part of a first segmented switching ring on the opposite end face (7) or on the end face (6) of the core (4).

8. Method according to at least one of the preceding claims, **characterized in that** additional joining connections for proximal/distal ends of coil elements are produced on the end face (6) of the core (4) which are comparable to the joining connections for distal/proximal ends of coil elements on the opposite end face (7) of the core (4).

9. Method according to at least one of the preceding claims, **characterized in that** the coil elements (1) are provided as straight, rod-shaped coil elements.

10. Method according to at least one of the preceding claims, **characterized in that** the coil elements are inserted into the grooves (5) in sequentially consecutive insertion processes.

11. Method according to at least one of the preceding claims, **characterized in that** multiple connection elements are arranged stacked over one another in layers on the opposite end face (7) and/or on the end face (6) of the core (4).

12. Method according to at least one of the preceding claims, **characterized in that** a connection element, which has one or more connection contacts, is used as the first connection element (8).

13. Arrangement for a plug-in coil of an electric machine, comprising:
- a core (4) which has grooves (5); and
- coil elements (1) which are rod-shaped and have a proximal and a distal end, wherein the coil elements (1) are inserted into the grooves (5) from an end face (6) of the core (4) in such a way that the proximal end is arranged in the area of the end face (6) and the distal end is arranged in the area of an opposite end face (7) of the core (4) or adjacent thereto;
wherein, for pre-positioning prior to a joining between respective joining partners, namely the distal or the proximal end of a first coil element and a first joining section (8a) of the first connection element (8) as well as the distal or the proximal end of a second coil element and a second joining section (8b) of the first connection element (8), a connection (16) is respectively formed, by means of which the relative position of the joining partners to one another is fixed and which is designed as a snap connection and/or latching connection;
wherein
- when forming the connection (16) between the joining partners, a projection (17), which is arranged on the distal or proximal end of the coil element, which is configured as a pin, and on which the first connection element (8) is mounted, is arranged in an assigned recess (18) on the joining section (8a) of the first connection element (8); and
- a projection (20), formed on the projection (17) on a distal pin end (19), engages into a circumferential groove (21) on the first connection element (8).

## Revendications

1. Procédé de fabrication d'un système pour une bobine interchangeable d'une machine électrique, avec :
- préparation d'un noyau (4) avec rainures (5) ;
- préparation d'éléments de bobine (1), qui sont en forme de bâtons et comportent une extrémité proximale et une extrémité distale ;
- enfichage des éléments de bobine (1) dans les rainures d'une face avant (6) du noyau (4) avec l'extrémité distale en avant de telle manière que l'extrémité proximale est disposée dans la zone de la face avant (6) et l'extrémité distale est disposée dans la zone d'une face avant opposée (7) du noyau (4) ou sont disposées à cet effet de façon contigüe ; et
- fabrication d'une liaison d'assemblage respective pour les extrémités distales ou proximales d'un premier et d'un deuxième élément de bobine avec un premier élément de liaison (8) attribué sur la face avant opposée (7) ou la face avant (6) du noyau (4), sachant à cet effet qu'avant l'assemblage entre les pièces à assembler respectives, notamment l'extrémité distale ou proximale du premier élément de bobine et une première section d'assemblage (8a) du premier élément de liaison (8) ainsi que l'extrémité distale ou l'extrémité proximale du deuxième élément de bobine et une deuxième section d'assemblage (8b) du premier élément de liaison (8), une liaison (16) est respectivement constituée avec laquelle la position relative des pièces à assembler est définie l'une par rapport à l'autre et qui est exécutée comme liaison enclenchable et/ou liaison encliquetable ;
sachant que
- lors de la constitution de la liaison (16) entre les pièces à assembler, une saillie (17) disposée sur l'extrémité distale ou proximale de l'élément de bobine, laquelle est exécutée comme un axe et sur laquelle le premier élément de liaison (8) est enfiché, est disposée dans un évidement attribué (18) sur la section d'assemblage (8a) du premier élément d'assemblage (8) ; et
- une saillie (20) formée sur la saillie (17) sur une extrémité d'axe distale (19) vient en prise dans une rainure périphérique (21) sur le premier élément de liaison (8).

2. Procédé selon la revendication 1, **caractérisé en ce que** dans la zone de la liaison, des points de contact électriques sont constitués frontalement et/ou périphériquement entre les pièces à assembler.

3. Procédé selon la revendication 2, **caractérisé en ce que** dans la zone des points de contact électriques, des sections de surface dotées d'une couche conductrice des pièces à assembler sont mises en contact.

4. Procédé selon au moins l'une quelconque des revendications précédentes, **caractérisé en ce qu'**un matériau conducteur géométriquement plat est utilisé pour le premier élément de liaison.

5. Procédé selon au moins l'une quelconque des revendications précédentes, **caractérisé en ce qu'**au moins une section centrale (8c ; 32) du premier élément de liaison (8), qui est disposée entre la première section d'assemblage et la deuxième section d'assemblage, est disposée au moins par endroits passant le long d'un bord situé radialement à l'intérieur et/ou radialement à l'extérieur d'une surface saisie par le noyau (4) sur la face avant opposée (7) ou la face avant (6).

6. Procédé selon au moins l'une quelconque des revendications précédentes, **caractérisé par** la fabrication d'une liaison d'assemblage respective pour les extrémités distales ou proximales d'un troisième et d'un quatrième élément de bobine avec un deuxième élément de liaison attribué sur la face avant opposée (7) ou la face avant (6) du noyau (4), sachant à cet effet qu'avant l'assemblage entre les pièces à assembler respectives, notamment l'extrémité distale ou l'extrémité proximale du troisième élément de bobine et d'une première section d'assemblage du deuxième élément de liaison ainsi que l'extrémité distale ou l'extrémité proximale du quatrième élément de bobine et une deuxième section d'assemblage du deuxième élément de liaison, une liaison est respectivement constituée avec laquelle la position relative des pièces à assembler est définie l'une par rapport à l'autre.

7. Procédé selon au moins l'une quelconque des revendications précédentes, **caractérisé en ce qu'**au moins le premier élément de liaison (8) est fabriqué en tant que partie d'une première bague de connexion segmentée sur la face avant opposée (7) ou la face avant (6) du noyau (4).

8. Procédé selon au moins l'une quelconque des revendications précédentes, **caractérisé en ce que**, comparativement aux liaisons d'assemblage pour les extrémités distales/proximales des éléments de bobine sur la face avant opposée (7) du noyau (4), d'autres liaisons d'assemblage sont fabriquées pour les extrémités distales/proximales des éléments de bobine sur la face avant (6) du noyau (4).

9. Procédé selon au moins une des revendications précédentes, **caractérisé en ce que** les éléments de bobine (1) sont préparés sous la forme d'éléments de bobine droits en forme de bâtons.

10. Procédé selon au moins une des revendications précédentes, **caractérisé en ce que** les éléments de bobine sont embrochés en opérations d'embrochage séquentiellement successives dans les rainures (5).

11. Procédé selon au moins une des revendications précédentes, **caractérisé en ce que** plusieurs éléments de liaison sont disposés sur la face avant opposée (7) et/ou sur la face avant (6) du noyau (4) empilés l'un sur l'autre en couches.

12. Procédé selon au moins une des revendications précédentes, **caractérisé en ce qu'**un élément de liaison est utilisé en tant que premier élément de liaison (8), lequel comporte un ou plusieurs contacts de connexion.

13. Système pour une bobine interchangeable d'une machine électrique, avec :
- un noyau (4), qui comporte des rainures (5) ; et
- des éléments de bobine (1), qui sont en forme de bâtons et comportent une extrémité proximale et une extrémité distale, sachant que les éléments de bobine (1) d'une face avant (6) du noyau (4) sont enfichés dans les rainures (5) de telle manière que l'extrémité proximale est disposée dans la zone de la face avant (6) et l'extrémité distale est disposée dans la zone d'une face avant opposée (7) du noyau (4) ou sont disposées à cet effet de façon contigüe ;
sachant que pour le prépositionnement avant un assemblage entre les pièces à assembler respectives, notamment l'extrémité distale ou l'extrémité proximale d'un premier élément de bobine et une première section d'assemblage (8a) d'un premier élément de liaison (8) ainsi que l'extrémité distale ou l'extrémité proximale d'un deuxième élément de bobine et une deuxième section d'assemblage (8b) du premier élément de liaison (8), une liaison (16) est respectivement constituée, avec laquelle la position relative des pièces à assembler est définie l'une par rapport à l'autre et qui est exécutée comme liaison enclenchable et/ou liaison encliquetable ;
sachant que
- lors de la constitution de la liaison (16) entre les pièces à assembler, une saillie (17) disposée sur l'extrémité distale ou l'extrémité proximale de l'élément de bobine, laquelle est exécutée comme un axe et sur laquelle le premier élément de liaison (8) est enfiché, est disposée dans un évidement attribué (18) sur la section d'assemblage (8a) du premier élément de liaison (8) ; et
- une saillie (20) formée sur la saillie (17) à une extrémité d'axe distale (19) vient en prise dans une rainure périphérique (21) sur le premier élément de liaison (8).
